# EUROPEAN PATENT APPLICATION

(11) **EP 3 629 306 A1**
(43) Date of publication of application: **01.04.2020**
(21) Application number: 19197261.1
(22) Date of filing: 13.09.2019
(51) Int. Cl.: G07C 9/00, H04N 7/18, H04M 1/02, H04M 11/02, H01H 23/00, H04L 12/28

(54) **APPARATUS AND METHOD FOR REMOTE OPENING ELECTRONIC DOOR LOCK**

(30) Priority: 26.09.2018 FI 20185799
(71) Applicant: Pindora Oy, 00180 Helsinki (FI)
(72) Inventor: Koski, Tuomas, 00150 Helsinki (FI); Häkkinen, Juha, 00100 Helsinki (FI)
(74) Representative: Papula Oy

(57) **Abstract**

An apparatus, arrangement and method for remote opening electric door lock of a building. The apparatus (1) comprises control unit (5), a data communication unit (3) and an electrical actuator (6) configured to open the door lock (2) under control of the control unit. The apparatus is mounted at a remote door opening switch (10) and the control unit generates a control signal for the actuator to open the lock in response to receiving at least one authentication signal. The actuator is configured to move a manually operable switching element of the door opening switch and to thereby cause opening of the door lock.

## Description

### Background of the invention

The invention relates to an apparatus for remote opening an electronic door lock connected to a door communication or door phone system of a building or real estate.

The invention further relates to an arrangement and method of remote opening electronic door locks of real estate and buildings.

The field of the invention is defined more specifically in the preambles of the independent claims.

Door communication systems are widely used in buildings and real estate when there is a need to open a front door or gate remotely from inside the building. Manuals actuation of a door opening switch inside the building opens an electronic door lock of the front door. However, when a resident of a flat or worker of an office is unavailable or is for any reason unable to press the unlocking button of the door communication system inside the building, then entry is not possible without keys. In order to solve this entry problem there is a need to update the outer unit of the door communication system and the electronic front door lock. However, this is difficult and expensive.

### Brief description of the invention

An object of the invention is to provide a novel and improved apparatus, arrangement and method for remote opening a door lock of a building.

The apparatus according to the invention is characterized by the characterizing features of a first independent apparatus claim.

The arrangement according to the invention is characterized by the characterizing features of a second independent apparatus claim.

The method according to the invention is characterized by the charactering features and steps of an independent method claim.

An idea of the disclosed solution is that the apparatus comprises an electrical actuator configured to open an electrical door lock remotely by moving a manually operable switching element of a door opening switch by means of the actuator. The apparatus is mountable in connection with a door communication system of a building. Further, operation of the apparatus is controlled by means of one or more control units, which are configured to generate a control signals for the actuator to open the lock in response to receiving at least one authentication signal. In other words, the apparatus is a door lock opening robot for real estates and houses. The actuator of the apparatus may imitate operation of a human finger pushing or actuating the manual door opening switch inside the building. Thus, the apparatus may be considered to be a kind of robotic finger.

An advantage of the disclosed solution is that a conventional manually operable door opening switch may be updated to a remote operable switch, whereby an electronic door lock of a building may be opened remotely by actuating the apparatus, where after the door opening switch is actuated and the electrical door lock, which is located remotely, is opened.

The disclosed door opening apparatus may be arranged to almost any door locking system comprising a door opening switch with manually operable switching element. No modifications are required to the door locks and outer units of door communication systems. The originally designed opening systems remain unchanged. Thus, the disclosed arrangement may be retrofitted to almost any door opening system. Further, mounting of the system is easy, quick and requires no skilled personal to do it. The apparatus may be relatively small in size, which also facilitates the mounting and retrofitting. The apparatuses may be delivered to the users as readily installable kits.

According to an embodiment, the disclosed solution may be implemented to open a front or street door lock, a lock of any other outside door or gate of an apartment building, office building, detached house or any other real estate object.

According to an embodiment, the disclosed solution provides a smart IoT (Internet of Things) robot to mechanically control actuation of a manually operable switching element of the door opening switch. The solution comprises an IoT switch connected to the Internet and a remote controlled electrical actuator for generating switching force and movement for mechanical control of the manually operable door opening switch. The opening robot may be controlled via an app on a smart phone or other mobile device, or via a user interface on a personal computer, for example.

According to an embodiment, the actuator of the door lock opening apparatus or robot is configured to press a push button, to turn a switching lever or to rotate a switching knob.

According to an embodiment, the disclosed solution relates to a smart electrical device or IoT robot. The device opens electrical lock of a door after the person requesting the door opening has been authenticated, and a door opening signal has been detected. The authentication may be made using the person's mobile device and the door opening signal can be, for example, a video picture, an audio or light alarm initiated by a push-button. The system ensures that the person on the door is physically present, thus preventing any hackers from illegally opening the doors. The robot can be easily installed to any door opening system. The switch bot is equipped with an electronic motor and can be adjusted to any door opening systems having a push opening button. Also the picture, audio or light sensors can be later installed.

According to an embodiment, the disclosed solution the apparatus may be without a second authentication system which is disclosed below in this document. The door communicating system may allow opening of the door lock only when the door bell has been first actuated. Then this feature may actually serve as a kind of second authentication for the unlocking. Actuation of the doorbell indicates that someone is physically at the outside door or gate.

According to an embodiment, the apparatus is provided with a support system which may comprise one or more lever arms, joints and corresponding elements, and may also comprise a clamping device or adhesive fastening element for easy mounting the apparatus in connection with the indoor unit. The support system may comprise means for allowing several different mounting possibilities.

According to an embodiment, the apparatus comprises at least one sensing device. Then the control unit or the apparatus is configured to generate the control signal in response to receiving two authentication signals. Then, in addition to the first authentication signal received from the external server a second authentication signal received from the sensing device is required for the opening of the door lock. In other words, the apparatus requires two factor authentication, or two phase authentication, before opening the door lock. Thanks to this embodiment security of the door opening may be increased.

According to an embodiment, the apparatus is configured to be located remotely from the user of the door lock but is still configured to detect presence of the user requesting the opening. The presence of the user is reproduced by means of a display device or sound generator at the remote location where the door opening switch is located, and this reproduced presentation is detected by the sensing device of the apparatus in order to confirm the physical presence of the user at the door.

According to an embodiment, the apparatus comprises two phase authentication and is provided with one or more sensing devices for detecting reproduced indication of presence of the user requesting the opening. The sensing device is a visual sensing device configured to detect visual data presented in a remote location relative to the door to be opened.

According to an embodiment, the mentioned visual sensing device is configured to sense visual data presented on a display device. Then the apparatus comprises a support or frame for supporting the sensing device close to the display device in order to monitor data presented on the display device.

According to an embodiment, the visual sensing device is configured to sense visual data presented on a flash indicator or blinker device. Then the apparatus comprises a support or frame for supporting the sensing device close to the flasher.

According to an embodiment, the visual sensing device is a camera.

According to an embodiment, the visual sensing device is a light sensor or light detector.

According to an embodiment, the visual sensing device is a scanner.

According to an embodiment, the sensing device is a heat detector or IR camera which is configured to sense initiation of a display device of an indoor unit of a door communication system. When an outdoor door bell is pushed, the outdoor unit of the door communication system starts taking video or still images, which are represented on a display device of the indoor unit. Further, the sensing device may be a sensor or measuring device for detecting electromagnetic radiation produced by the display device when being switched on. One more possibility is that the sensing device is configured to detect when electricity is switched on in the inner unit.

According to an embodiment, the apparatus comprises two phase authentication and is provided with one or more sensing devices for detecting reproduced indication of presence of the user requesting the opening. In this embodiment the sensing device is an audio detector configured to detect sound presented in a remote location relative to the door to be opened.

According to an embodiment, the audio detector is configured to monitor sound generated by a sound generator, buzzer or loud speaker. Manual actuation of the doorbell switch at the remote door activates the sound generator and this is detected by the audio detector.

According to an embodiment, the audio detector serving as the sensing device is a microphone.

According to an embodiment, the audio detector serving as the sensing device is an audio sensor or vibration detector.

According to an embodiment, the apparatus comprises support means for supporting the audio detector at reach of the sound generator.

According to an embodiment, the control unit is in data communication with a user application implementing a password or pin code inquiry solution and configured to generate the first authentication signal when a password or pin code is accepted and access is granted.

According to an embodiment, the mentioned user application is implemented in a smart phone, communicator or other portable electrical terminal device, which is in wireless data communication with at least one server, the Internet service or cloud service.

According to an embodiment, the mentioned user application is implemented in a workstation or personal computer. Thus, the user application may also be implemented in non-portable electronic device.

According to an embodiment, the password inquiry solution is configured to request a pre-set character string which may comprise numerals, letters and other charters. Typically the password inquiry solution is a pin code solution requiring four numerals 0 to 9.

According to an embodiment, the apparatus comprises several devices or modules which are integrated into one piece unity.

According to an embodiment, the apparatus comprises several devices or modules which are separate devices which communicate with each other either through wireless or wired data transmission.

According to an embodiment, the actuator allows also manual actuation of the door opening switch.

According to an embodiment, the actuator is configured to be in physical contact with the door opening switch only when being actuated. Then the door opening switch remains available for manual actuation and allows the door communication system to be used in a conventional manner.

According to an embodiment, the apparatus is provided with an active mode and a sleep mode, and the apparatus remains predominantly in the sleep-mode and is only activated in response to receiving the second authentication signal from the sensing device configured to detect reproduced presence of the user.

According to an embodiment, the mentioned active mode is activated, when operation of the sensing device is initiated and then the control unit is configured to seek the required first authentication for the lock opening measures. Thanks to this embodiment, electric consumption of the apparatus may be lower since the searching occurs only when needed. When the apparatus is battery operated, operating time may be longer.

According to an embodiment, the apparatus is an accessory kit allowing retrofitting the apparatus in connection with an existing indoor unit of a door communication system comprising an outdoor unit and an indoor unit, which are in remote communication connection with each other.

According to an embodiment, the apparatus is removably attachable on a top surface of an indoor unit of a door communication system.

According to an embodiment, the apparatus comprises fastening elements for tool free mounting. The fastening elements may be clips, adhesive elements, tie elements or bandages.

According to an embodiment, the apparatus comprises at least one electrical power storage. An advantage of the power storage is that mounting of the apparatus is facilitated when no electrical connections to electric network are needed. Then no authorized electrician is needed to mount the apparatus.

According to an embodiment, the apparatus comprises an own electrical connection to electric network and is thereby independent of the electrical system of the inner unit of the door communication system.

According to an embodiment, the apparatus is connectable to an electric system of the inner unit of the door communication system. The inner unit may be provided with an USB port allowing easy electrical connection between the apparatus and the inner unit.

According to an embodiment, disclosed solution relates to an arrangement for remote opening door locking of a building, wherein the arrangement comprises a door communication system comprising an indoor unit and an outdoor unit. The units are in remote communication connection with each other. The outdoor unit comprises an electrical door lock which is configured to open in response to receiving an opening signal from the remote indoor unit. The outdoor unit comprises a doorbell switch actuation of which is communicated to the remote indoor unit. The indoor unit comprises a manually operable door opening switch which is configured to generate the opening signal when being actuated and the opening signal is transmitted to the electrical door lock for opening the locking. The arrangement further comprises an apparatus for actuating the manual door opening switch of the indoor unit under remote control. The apparatus is mounted in connection with the indoor unit and is according to any one of the embodiments presented above.

According to an embodiment, the arrangement is mounted to an apartment house or multi-storey building comprising several apartments or offices.

According to an embodiment, the outer unit is located at an outside door or front door or gate of a building. The inner unit is located at a stairway door or at a door of the apartment or office.

According to an embodiment, the apparatus is configured to verify physical presence of a user of the door opening switch before actuating the door opening switch.

According to an embodiment, the apparatus is a separate device relative to the door communication system and is retrofitted to the indoor unit.

According to an embodiment, the apparatus is independently operable and is without electrical connection to the inner unit.

According to an embodiment, the apparatus is mountable in connection with the indoor unit without any structural modifications to the indoor unit. The apparatus is easy to remove and to re-mount to another apartment.

According to an embodiment, the apparatus is an accessory, which can be mounted in a removable manner in connection with the inner unit.

According to an embodiment, the outer unit is not provided with any additional devices relating to the disclosed solution but instead, the outer unit may remain as such. The disclosed solution requires physical means only to be arranged in connection with the inner unit.

According to an embodiment, the solution relates to a method of remote opening an electric door lock of a building. The method comprises the following steps: using a door communication system for remote opening the electrical door lock, and wherein the system comprises an indoor unit provided with a door opening switch and an outdoor unit provided with a doorbell switch; actuating manually by a user the doorbell switch and communicating this to the inner unit; actuating a manual door opening switch of the inner unit for generating an opening signal and transmitting the opening signal from the inner unit to the outer unit; opening the door lock under control of the outer unit; executing actuation of the manual door opening switch by means of an apparatus which is mounted in connection to the inner unit; generating switching movement by means of an actuator of the apparatus and directing the movement to the door opening switch; and requiring passage of at least a first authentication based on pass word acceptance before initiating operation of the actuator of the apparatus.

According to an embodiment, the method requires also passage of a second authentication based on detected physical presence of a user at the outdoor unit before operating the actuator.

According to an embodiment, the method further comprises the following features: generating by means of the outer unit visual data on the user present at the outdoor unit and transmitting the generated data to the indoor unit which presents the visual data on a display device of the indoor unit; detecting the displayed visual data by means of a sensing device of the apparatus; and creating the second authentication in response to the detected visual data presented on the display device.

According to an embodiment, the control unit of the apparatus may be provided with a shape recognition feature for recognizing faces or other features of different users.

According to an embodiment, the visual data may comprise video picture.

According to an embodiment, the visual data may comprise still pictures.

According to an embodiment, the outer unit is provided with one or more cameras.

According to an embodiment, the apparatus is configured to transmit the detected visual data to a server or cloud service being in data communication with the apparatus. The visual data, such as video picture, of the user physically present at the outdoor unit may be transmitted from the server, or the cloud service, to one or more electrical terminal devices. The visual data may be presented on a user application and may also be stored.

According to an embodiment, history data of the door lock opening and the authentication measures may be stored for later use. The history data may also be analyzed and desired reports may be produced.

According to an embodiment, the method further comprises: generating sound by means of a buzzer of the inner unit in response to received detection on actuation of the doorbell switch; detecting the generated sound by means of a sensing device of the apparatus; and creating the second authentication in response to the detected sound of the buzzer.

The above disclosed embodiments and features may be combined in order to form suitable solutions that are needed.

### Brief description of the figures

Some embodiments are described in more detail in the accompanying drawings, in which
Figure 1 shows schematically a diagram of features of an apparatus for remote opening door locks,
Figure 2 shows schematically a diagram of features of an alternative apparatus provided with means for second authentication procedure before executing the remote opening,
Figure 3 is a schematic diagram of some alternative actuators of the robotic door opener, and
Figure 4 is a schematic diagram of some possible sensing devices of the door opening apparatus.

For the sake of clarity, the figures show some embodiments of the disclosed solution in a simplified manner. In the figures, like reference numerals identify like elements.

### Detailed description of some embodiments

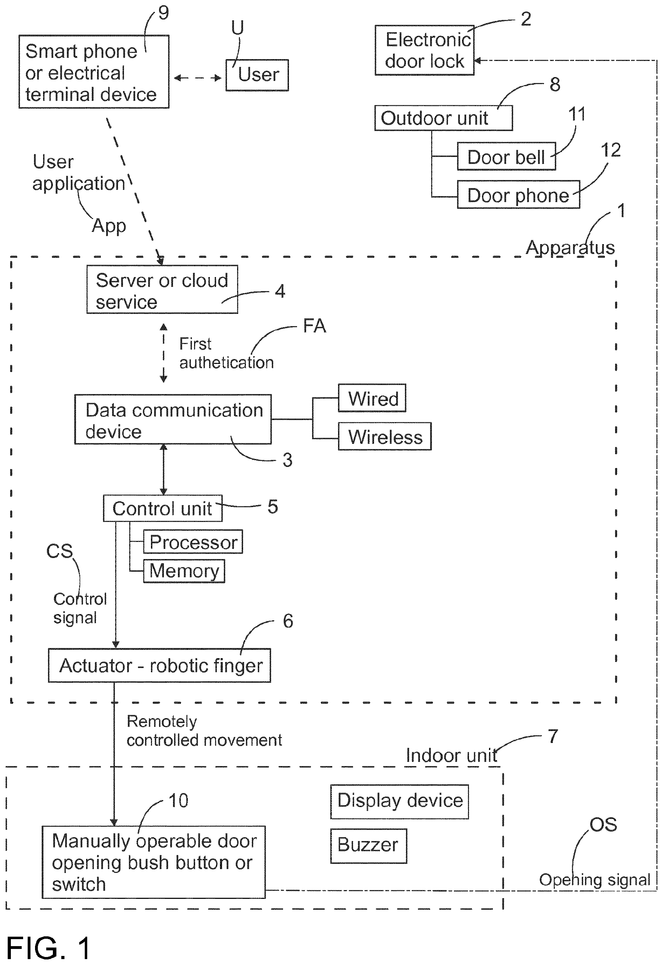

Figure 1 discloses an apparatus 1 for opening an electrical door lock 2. The apparatus comprises a data communication device 3 allowing communication between one or more servers 4 and a control unit 5. The apparatus 1 also comprises an actuator 6 which is controlled by the control unit 5. The apparatus is arranged in connection with an indoor unit 7 of a door communication system, which also comprises an outdoor unit 8. The inner unit 7 and the outer unit 8 communicate with each other.

When a user U is at the outdoor, he or she may contact the server 4 or cloud service of the door opening apparatus 1 by means of a smart phone or other electrical device 9. There may be a user application App for facilitating the use of the system. The system executes a first authentication FA procedure which may request entering a pin code or pass word. If the authentication is granted the control unit 5 generates a control signal CS for controlling operation of the actuator 6. The actuator 6 is a kind of motorized finger or robot finger which may generate remotely controlled movement and may thereby move a manually controlled door opening switch 10, which is part of the indoor unit 7. The actuator 6 is located at the door opening switch 10 and comprises at least one electrical motor or force device for generating the needed movement. When the door opening switch 10 is actuated, then the indoor unit 7 sends an opening signal OS to the electronic lock 2 and the lock opens.

The door communication system may require that a door bell 11 or a door phone 12 is actuated before allowing generation of the opening signal OS. Then someone needs to be physically present at the outdoor and use the outdoor unit 8 or otherwise the system will not unlock the door. The disclosed apparatus 1 may utilize this feature as a kind of second authentication SA.

Further, the user U of the apparatus may locate elsewhere than at the door to be opened. Then the first authentication FA may be executed by a user who is other than the one being physically present at the outdoor. This way guests, postman, deliveryman and any other may be allowed to enter inside the building.

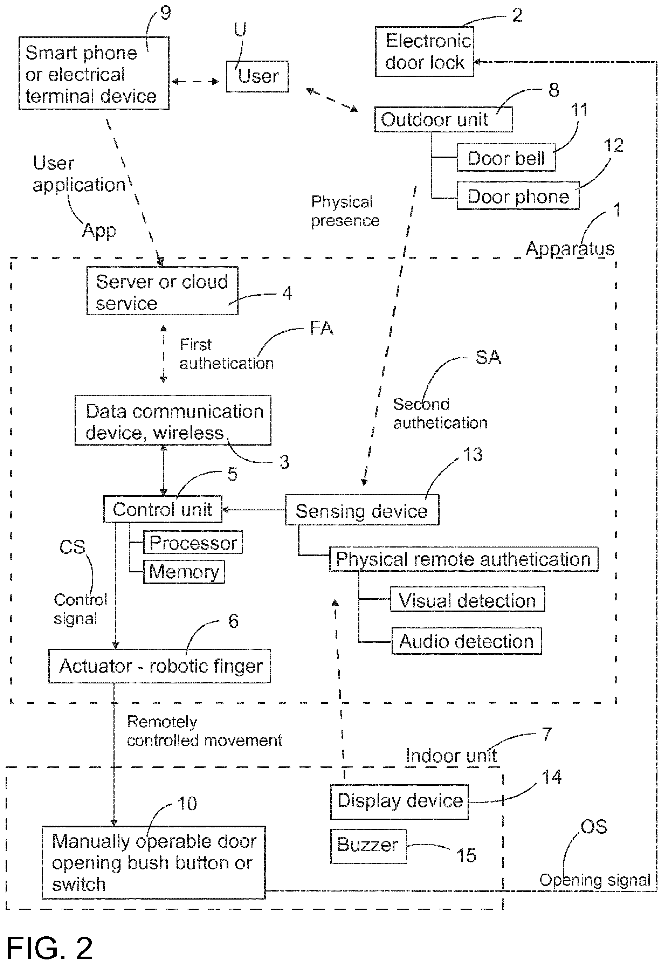

Figure 2 discloses another apparatus 1 basic setting of which corresponds to the one show in Figure 1. However, the apparatus 1 is further provided with one or more sensing devices 13 for detecting actuation of a display device 14 or buzzer 15 of the indoor unit 7. Then the sensing device 13 notifies when the doorbell 11 or door phone 12 of the outdoor unit 8 is actuated and indication of physical presence of the user U at the outdoor is ensured and second authentication SA occurs. Visual or audio detection will activate the apparatus 1 to seek the first authentication FA before generating control command to the actuator 6 for pressing the door opening push button 10. In this solution two phase authentication is required for the unlocking.

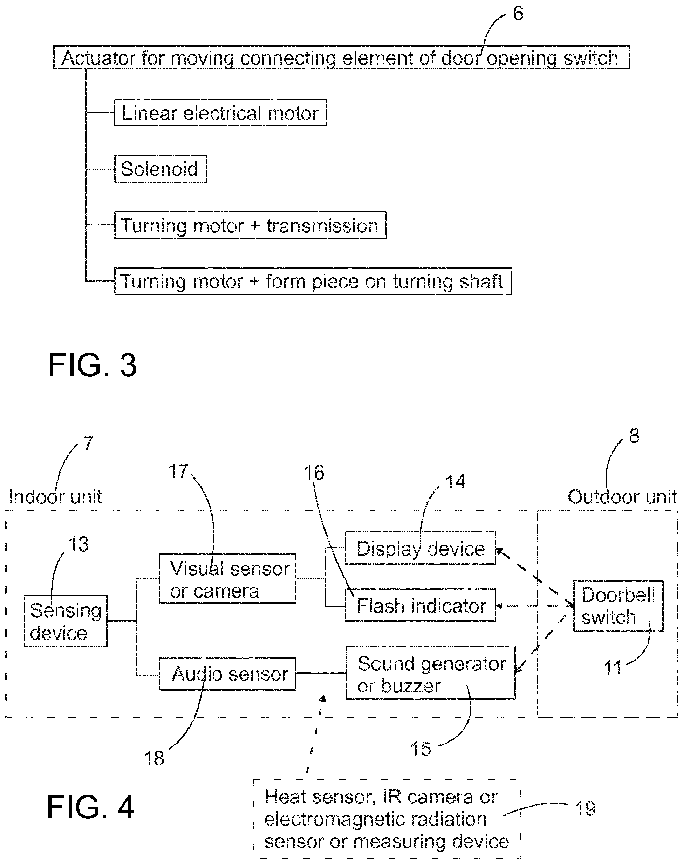

Figure 3 shows some possible alternative structures and operational principles for the actuator 6.

Figure 4 discloses that when the doorbell switch 11 or corresponding switch of the outdoor unit 8 is actuated, the display device 14, the buzzer 15, or a flash indicator 16 of the indoor unit 7 is operated. The sensing device 13 of the indoor unit 7 may comprise a visual sensor 17 for detecting that the display device 14 or the flash indicator 16 is activated. Alternatively, or in addition to, the sensing device 13 may comprise an audio sensor 18 detecting sound. A still further possibility is that the sensing device 13 comprises a heat sensor 19 or IR camera for detecting that the display device 14 is operating and produces heat. Further, there may be a sensor or measuring device for detecting electromagnetic radiation caused by any electrical device activated at the indoor unit 7 when the doorbell 11 is pushed.

The drawings and the related description are only intended to illustrate the idea of the invention. In its details, the invention may vary within the scope of the claims.

## Claims

1. An apparatus for remote opening door lock of a building, the apparatus (1) comprises:
at least one control unit (5) provided with at least one processor and at least one memory device;
at least one data communication unit (3) for wireless communication; and
an electrical actuator (6) configured to open the door lock under control of the control unit (5);
**characterized in that**
the apparatus (1) is configured to be mounted at a door opening switch (10), which is located separately relative to the door lock;
the control unit (5) is configured to generate a control signal for the actuator (6) to open the lock in response to receiving at least one authentication signal, wherein a first authentication signal is received from an external server (4) by means of the data communication unit (3); and
the actuator (6) is configured to move a manually operable switching element of the door opening switch (10) and to thereby cause opening of the door lock.

2. The apparatus as claimed in claim 1, **characterized in that**
the apparatus (1) comprises at least one sensing device (13); and
the control unit (5) is configured to generate the control signal in response to receiving two authentication signals, wherein in addition to the first authentication signal received from the external server (4) a second authentication signal received from the sensing device (13) is required for the opening of the door lock.

3. The apparatus as claimed in claim 2, **characterized in that**
the sensing device (13) is a visual sensing device (17) configured to detect visual data presented in a remote location relative to the door to be opened.

4. The apparatus as claimed in claim 2 or 3, **characterized in that**
the sensing device (13) is an audio detector (18) configured to detect sound presented in a remote location relative to the door to be opened.

5. The apparatus as claimed in any one of the preceding claims 1 - 4, **characterized in that**
the control unit (5) is in data communication with a user application (App) implementing a password inquiry solution and configured to generate the first authentication signal when a password is accepted and access is granted.

6. The apparatus as claimed in any one of the preceding claims 1 to 5, **characterized in that**
the apparatus (1) comprises several devices or modules which are integrated into one piece unity.

7. The apparatus as claimed in any one of the preceding claims 1 to 6, **characterized in that**
the actuator (6) allows also manual actuation of the door opening switch (10).

8. The apparatus as claimed in any one of the preceding claims 2 to 7, **characterized in that**
the apparatus (1) is provided with an active mode and a sleep mode, and the apparatus (1) remains predominantly in the sleep-mode and is only activated in response to receiving the second authentication signal from the sensing device (13).

9. The apparatus as claimed in any one of the preceding claims 1 to 8, **characterized in that**
the apparatus (1) is an accessory kit allowing retrofitting the apparatus in connection with an existing indoor unit (7) of a door communication system comprising an outdoor unit (8) and an indoor unit (7), which are in remote communication connection with each other.

10. The apparatus as claimed in any one of the preceding claims 1 to 9, **characterized in that**
the apparatus (1) comprises at least one electrical power storage.

11. An arrangement for remote opening door locking of a building, wherein
the arrangement comprises a door communication system comprising an indoor unit (7) and an outdoor unit (8), which units are in remote communication connection with each other;
the outdoor unit (8) comprises an electrical door lock (2) which is configured to unlock in response to receiving an opening signal from the indoor unit (7);
the outdoor unit (8) comprises a doorbell switch (11) actuation of which is communicated to the indoor unit (7); and
the indoor unit (7) comprises a manually operable door opening switch (10) which is configured to generate the opening signal when being actuated and the opening signal is transmitted to the electrical door lock (2) for opening the locking;
**characterized in that**
the arrangement comprises an apparatus (1) for actuating the manual door opening switch (10) of the indoor unit (7) under remote control; and
the apparatus (1) is mounted in connection with the indoor unit (7) and is according to any one of the preceding claims 1 - 10.

12. The arrangement as claimed in claim 11, **characterized in that**
the apparatus (1) is configured to verify physical presence of a user (U) of the doorbell switch (11) before actuating the door opening switch (10).

13. The arrangement as claimed in claim 11 or 12, **characterized in that**
the apparatus (1) is a separate device relative to the door communication system and is retrofitted to the indoor unit (7).

14. A method of remote opening an electric door lock of a building; wherein the method comprises:
using a door communication system for remote opening the electrical door lock (2), and wherein the system comprises an indoor unit (7) provided with a door opening switch (10) and an outdoor unit (8) provided with a doorbell switch (11);
actuating manually by a user (U) the doorbell switch (11) and communicating this to the inner unit (8);
actuating the manual door opening switch (10) of the inner unit (7) for generating an opening signal (OS) and transmitting the opening signal (OS) from the inner unit (7) to the outer unit (8); and
opening the door lock (2) under control of the outer unit (8);
**characterized by**
executing actuation of the manual door opening switch (10) by means of an apparatus (1) which is mounted in connection to the inner unit (7);
generating switching movement by means of an actuator (6) of the apparatus (1) and directing the movement to the door opening switch (10); and
requiring passage of at least a first authentication (FA) based on pass word or pin code acceptance before initiating operation of the actuator (6) of the apparatus (1).

15. The method according to claim 14, **characterized by**
requiring also passage of a second authentication (SA) based on detected physical presence of a user (U) at the outdoor unit (8) before operating the actuator (6).

16. The method according to claim 15, **characterized by**
generating by means of the outer unit (8) visual data on the user (U) present at the outdoor unit (8) and transmitting the generated data to the indoor unit (7) which presents the visual data on a display device (14) of the indoor unit (7);
detecting the displayed visual data by means of a sensing device (13) of the apparatus (1); and
creating the second authentication (SA) in response to the detected visual data presented on the display device (14).

17. The method according to claim 15 or 16, **characterized by**
generating sound by means of a buzzer (15) of the inner unit (7) in response to received detection on actuation of the doorbell switch (11);
detecting the generated sound by means of a sensing device (13) of the apparatus (1); and
creating the second authentication (SA) in response to the detected sound of the buzzer (15).
